# EUROPÄISCHE PATENTSCHRIFT

(11) **EP 2 331 231 B1**
(45) Veröffentlichungstag und Bekanntmachung des Hinweises auf die Patenterteilung: **20.11.2013**
(21) Anmeldenummer: 09781691.2
(22) Anmeldetag: 11.08.2009
(51) Int. Cl.: B01D 46/00, B01D 46/24

(54) **FILTER MIT DRAINAGEANSCHLUSS**
FILTER HAVING A DRAINAGE CONNECTION
FILTRE ÉQUIPÉ D'UN RACCORD DE DRAINAGE

(30) Priorität: 09.09.2008 DE 102008046499
(43) Veröffentlichungstag der Anmeldung: 15.06.2011
(73) Patentinhaber: MANN+HUMMEL GmbH, 71638 Ludwigsburg (DE)
(72) Erfinder: BECKER, Stefan, 68305 Mannheim (DE); MÜNKEL, Karlheinz, 75038 Oberderdingen-Flehingen (DE); NGUYEN, Duc Cuong, 30880 Laatzen (DE)
(86) Internationale Anmeldenummer: PCT/EP2009/060367
(87) Internationale Veröffentlichungsnummer: WO 2010/028922

(56) Entgegenhaltungen:
- EP-A- 0 601 196
- DE-A1- 19 606 182
- DE-A1- 19 806 929

## Beschreibung

### Technisches Gebiet

Die Erfindung betrifft einen Filter der im Oberbegriff des Anspruchs 1 angegebenen Gattung. Ein solcher Filter umfasst ein Filtergehäuse und einen darin aufgenommenen Filtereinsatz mit einem Filterelement, eine stirnseitig am Filtereinsatz angeordnete Filterendscheibe und einen Sammelraum für von dem Filter abgeschiedene Flüssigkeit, die über eine mit dem Sammelraum in Verbindung stehende Drainageleitung in der Filterendscheibe aus dem Filter entnommen werden kann.

Ein solcher Filter hat ferner ein Filterverschluss-System zum dichten Verbinden eines stirnseitigen Anschlussendes des kreiszylindrischen Filtergehäuses mit einem mit dem Anschlussende korrespondierenden Anschlusskopf, in den das Anschlussende in einer axialen Steckrichtung einsetzbar bzw. aufsetzbar und beispielsweise durch eine Steck-DrehBewegung formschlüssig mit dem Anschlusskopf verbindbar ist, wobei das Anschlussende und der Anschlusskopf an mindestens einer Verbindungsstelle eine Bajonettverbindung aufweisen können.

Das Filterverschluss-System dient zum Herstellen einer druckdichten, und/oder gasdichten und/oder flüssigkeitsdichten Verbindung zwischen dem Filtergehäuse und dem Anschlusskopf. Die Erfindung richtet sich gleichermaßen auf Filter, die zum einmaligen Montieren vorgesehen sind, wie auch auf solche, bei denen der Filter bei Wartungs- oder Instandsetzungsarbeiten regelmäßig ausgewechselt wird.

Ein bevorzugtes Anwendungsgebiet derartiger Filter sind stationäre und fahrbare Druckluftanlagen. Die hierfür verwendeten Kompressoren (zumeist Schraubenkompressoren) erzeugen einen Druck von bis zu ca. 20 bar, typischerweise etwa 7 bis 8 bar, und benötigen Öl zum Schmieren, Abdichten und Kühlen der sich bewegenden Teile, wodurch ölhaltige Gase entstehen. Es werden pro Kubikmeter Luft ca. 5 Liter Öl in den Schraubenkompressor eingespritzt; das Entölen der Druckluft stellt somit eine wichtige Maßnahme da. Um den größten Teil dieses Öls zurückzugewinnen und die Druckluft von dem Öl zu reinigen, werden Luftentölelemente benutzt, die im Zuge der Wartung der Anlage regelmäßig auszutauschen sind.

Diese Luftentölelemente sind die Filterelemente eines entsprechenden Filters und sind in einem Filtergehäuse untergebracht. Das Filtermedium ist zumeist ein Wickelfilter bzw. Koaleszenzfilter. Bei den Filtern oder den in das Filtergehäuse eingesetzten Filterelementen handelt sich um Wegwerfteile, weil die Filterelemente nicht nur Öl abscheiden, das in den Ölkreislauf der Druckluftanlage zurückgeführt und weiterverwendet wird, sondern sich im Laufe der Zeit durch abgeschiedene Schmutzpartikel zusetzen. Eine ähnliche Anwendung derartiger Luftentölelemente oder Ölabscheider ergibt sich bei Vakuumpumpen.

Aus der EP 601 196 A1 ist ein Filtersystem für Druckluft mit einer ersten Filtereinrichtung, einer zweiten Filtereinrichtung und einer Drainageleitung bekannt.

Aus der DE 198 06 929 A1 ist ein Filter mit eine Dichtungsanordnung umfassend eine Dichtungsnut und einem in die Dichtungsnut eingreifenden Dichtungsring bekannt.

Aus der DE 196 06 182 A1 ist ein Filter mit eine Dichtungsanordnung umfassend eine Dichtungsnut und zwei in die Dichtungsnut eingreifenden Dichtungsringen bekannt.

Andere Anwendungen derartiger Filter finden sich als Flüssigkeitsfilter, die Schmutzpartikel oder andere Bestandteile aus einer Flüssigkeit herausfiltern, z.B. Ölfilter, Kraftstofffilter, Hydraulikflüssigkeitsfilter, Kühlmittelfilter, Wasserabscheider oder Prozessfilter zum Abscheiden großer Schmutzmengen aus Prozessflüssigkeiten, insbesondere bei Schleif-, Erodier- oder Funkenerodierprozessen. Filter werden auch als Flüssigkeitsabscheider eingesetzt, die flüssige oder feste Verunreinigungen aus einem Gasstrom abtrennen, insbesondere bei Brennkraftmaschinen, beispielsweise beim Reinigen von ölhaltigen Entlüftungsgasen aus dem Kurbelgehäuse.

In Bereichen wie der Ölfiltration und Luftentölung muss ein Filter insbesondere den Anforderungen hinsichtlich Druck- und Temperaturfestigkeit genügen. Wichtige Merkmal sind zumeist auch die einfache, selbsterklärende und Bedienungsfehler ausschließende Handhabbarkeit und die kostengünstige Herstellung und/oder Entsorgung.

### Stand der Technik

Im Stand der Technik haben sich vor allem Filter mit Filterverschluss-Systemen etabliert, die auf Gewindeverbindungen beruhen. Dabei wird ein Filtergehäuse in der Regel mit einem zentral anordneten Gewinde, das sich in einer in das Filtergehäuse eingesetzten Endscheibe befindet, auf einen korrespondierenden Gewindestutzen des Anschlusskopfes aufgeschraubt und mittels mehrerer verteilt angeordneter Dichtmittel in Form von axial abdichtenden O-Ringen eine Dichtung erzielt. Ferner sind auch Bajonettverbindungen bekannt.

Ausgehend von diesem Stand der Technik besteht die Aufgabe der Erfindung darin, einen Filter zu schaffen, bei dem auf einfache Weise eine dichte Verbindung hergestellt werden kann und der in der Herstellung und/oder Entsorgung kostengünstig ist.

Diese Aufgabe wird erfindungsgemäß durch einen Filter mit den Merkmalen des Anspruchs 1 gelöst. Bevorzugte Ausgestaltungen und Weiterbildungen der Erfindung ergeben sich aus den abhängigen Ansprüchen und der nachfolgenden Beschreibung mit zugehörigen Zeichnungen.

### Offenbarung der Erfindung

Der erfindungsgemäße Filter umfasst ein Filtergehäuse und einen darin aufgenommenen Filtereinsatz mit einem Filterelement, eine stirnseitig am Filtereinsatz angeordnete Filterendscheibe und einen Sammelraum für von dem Filter abgeschiedene Flüssigkeit, die über eine mit dem Sammelraum in Verbindung stehende Drainageleitung in der Filterendscheibe aus dem Filter entnommen werden kann. Der erfindungsgemäße Filter weist die Besonderheit auf, dass die Filterendscheibe eine elastische Außendichtung umfasst, die zum Abdichten der Rohseite des Filters gegenüber dem Sammelraum dient, und eine elastische Innendichtung umfasst, die zum Abdichten der Reinseite des Filters gegenüber dem Sammelraum dient, wobei die Außendichtung eine umlaufende, radial nach innen weisende Außendichtfläche und die Innendichtung eine umlaufende, radial nach außen weisende Innendichtfläche bilden, die Außendichtfläche und die Innendichtfläche einander gegenüberliegend angeordnet sind und einen dazwischen liegenden umlaufenden Dichtraum in radialer Richtung begrenzen, und die Außendichtung und die Innendichtung als zusammenwirkende steckbare Dichtung ausgebildet sind, wobei zum Schließen der steckbaren Dichtung der Filter in einer axialen Steckrichtung auf einen mit dem Filter korrespondierenden Anschlusskopf einsetzbar bzw. aufsetzbar ist, wobei der Anschlusskopf einen umlaufenden Steg aufweist, der dabei in den Dichtraum eingesteckt wird und durch eine Klemm- oder Presspassung mit der Außen- und der Innendichtung den Dichtraum radial abdichtet.

Erfindungsgemäß ist der Dichtraum als Sammelraum für von dem Filter abgeschiedene Flüssigkeit ausgebildet ist oder geht in einen Sammelraum über oder steht mit einen Sammelraum in Verbindung.

Vereinfacht ausgedrückt wird ein Filter vorgeschlagen, bei dem die Dichtfunktion zwischen Roh- und Reinseite, die nach dem Stand der Technik durch mehrere an unterschiedlichen Orten angeordnete radial nach außen wirkende O-Ringe bewirkt wird, durch eine beim Aufstecken erzielte Verpressung gegenüberliegender Dichtflächen mit einem dazwischen liegenden Steg bewirkt wird.

Ein erfindungsgemäßer Filter hat die Vorteile, dass auf eine einfache Weise eine dichte Verbindung hergestellt werden kann, wobei eine einfache, selbsterklärende und Bedienungsfehler ausschließende Handhabbarkeit ermöglicht wird. Ferner kann die Herstellung und/oder Entsorgung kostengünstig erfolgen. Weitere Vorteile der Erfindung sind die Anwendbarkeit auf engstem Raum und zu niedrigen Kosten und die vorteilhafte Realisierbarkeit metallfreier Ausführungen der Filter einschließlich Filtergehäuse, Filterelement und Verschluss, was nicht nur Vorteile hinsichtlich der Korrosionsbeständigkeit hat, sondern auch für die Entsorgung verbrauchter Filter.

Besonders vorteilhaft sind Ausführungsformen, bei denen das Filtergehäuse einen Bajonett-Anschluss zum Verbindung mit dem Anschlusskopf aufweist. Damit kann eine hochfeste Verbindung mit großer Trag- und Haltekraft, die auch mit geringen Montagekräften erzielt wird, bewirkt werden, und es ergibt sich eine schnelle Montage- und Demontagemöglichkeit, da im Gegensatz zu Aufschraubfiltern nicht mehrere Umdrehungen des Filters für das Auf- und Abschrauben erforderlich sind.

Insbesondere in der Ausführungsform mit einem Bajonett-Verschluss können metallfreie Filter hergestellt werden, weil im Gegensatz zum Stand der Technik keine stabile, d.h. aus Metall gefertigte stirnseitige Filterendscheibe mit einem zentralen Gewinde erforderlich ist, um den Aufschraubfilter fest auf einen Gewindedorn des Anschlusskopfes aufzuschrauben. Daher kann die Filterendscheibe erheblich schwächer ausgebildet werden, also dünner und/oder in Kunststoff. Dies liegt daran, dass der Kraftfluss zwischen dem Filtergehäuse und dem Anschlusskopf, das heißt die Krafteinleitung zwischen diesen beiden Teilen zum Herstellen der mechanischen Verbindung mit einem mehrreihigen, weiter außen am Filtergehäuse liegenden Bajonett besser ist als bei einem zentralen Gewinde. Somit kann der gesamte Filter, umfassend das Filtergehäuse und ein darin angeordnetes Filterelement sowie die stirnseitige Filterendscheibe, metallfrei ausgebildet sein.

Ein weiterer Vorteil ergibt sich bei metallfreien Ausführungsformen dadurch, dass Kunststoffteile in der Fertigung unaufwendiger mit hoher Sauberkeit hergestellt werden können als Metallteile. Metallteile weisen Rückstände in Form von Spänen, Öl und Schweißablagerungen auf, die in einer aufwendigen Reinigung entfernt werden müssen, wobei die Gefahr besteht, dass Rückstände verbleiben. Kunststoffteile können dagegen im Spritzgussverfahren ohne derartige Rückstände mit großer Sauberkeit hergestellt werden.

Ein weiterer Vorteil des erfindungsgemäßen Filters, insbesondere in der Ausgestaltung mit einer außenseitigen Bajonettverbindung, besteht darin, dass die stirnseitige Filterendscheibe frei für das Zuführen und Abführen der Fluide gestaltet werden kann. Dadurch lassen sich die Strömungsverhältnisse in dem Filter und die Abscheidung des Filters verbessern sowie der Druckverlust vermindern.

Ferner weist ein erfindungsgemäßer Filter, der keine gebräuchlichen radiale Dichtungen, sondern eine Dichtung durch Verpressung mit einer Steckfunktion aufweist, die Vorteile einer reduzierten Teilezahl, reduzierter Montagekosten, einer Vermeidung von Fehlern in der Fertigung, eine verbesserte Dichtfunktion aufgrund einer besseren Einstellung der Verpressung der Dichtflächen, einen größeren Toleranzausgleich, eine Bauraumeinsparung sowie ggf. das Einsparen einer separat einzusetzenden Dichtung auf.

### Kurze Beschreibung der Zeichnungen

Die Erfindung wird nachfolgend anhand eines in den Figuren dargestellten Ausführungsbeispiels näher erläutert. Die darin beschriebenen Besonderheiten können einzeln oder in Kombination miteinander eingesetzt werden, um bevorzugte Ausgestaltungen der Erfindung zu schaffen. In den Zeichnungen zeigen:

Fig. 1 eine teilgeschnittene perspektivische Ansicht eines Filters nach dem Stand der Technik auf einem Anschlusskopf,

Fig. 2 eine Ansicht eines erfindungsgemäßen Filter mit einem Anschlusskopf nach der Montage des Filters auf dem Anschlusskopf,

Fig. 3 einen Schnitt A-A zu Fig. 2,

Fig. 4 einen Schnitt B-B zu Fig. 3,

Fig. 5 einen Ausschnitt zu Fig. 3,

Fig. 6 einen Ausschnitt zu Fig. 4 und

Fig. 7 eine geschnittene perspektivische Teilansicht einer Filterendscheibe eines erfindungsgemäßen Filters.

### Ausführungsform(en) der Erfindung

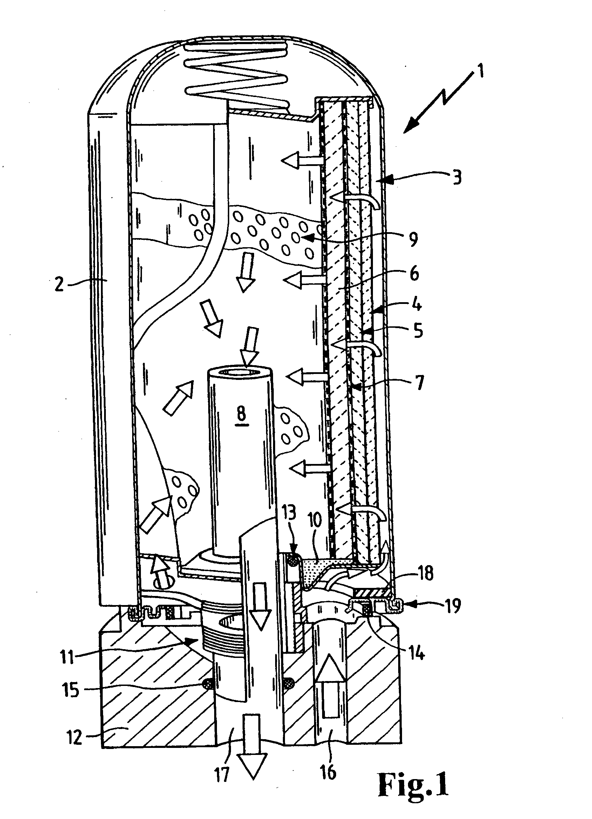

Die Figur 1 zeigt einen Filter 1 nach dem Stand der Technik, der als Anschraubfilter, so genannter Spin-On-Filter als Ölabscheider in einer Anlage zum Erzeugen von Druckluft dient. Der Filter 1 dient zum Entölen von Luft und umfasst ein druckfestes, kreiszylindrisches Filtergehäuse 2, das aus Kunststoff oder Metall besteht und als Filterbecher oder Filtertopf ausgebildet ist. In dem Filtergehäuse 2 befindet sich ein Filterelement 3, das radial von außen nach innen durchströmt wird und dabei das Öl abscheidet. In dem dargestellten Ausführungsbeispiel umfasst das Filterelement 3 einen Vorabscheider 4, einen Feinabscheider 5 und einen Nachabscheider 6.

Ferner befinden sich in dem Filter 1 ein druckstabiles Stützrohr 7 für den Vorabscheider 4 und den Feinabscheider 5, ein weiteres Stützrohr 9 für den Nachabscheider 6 sowie ein Tauchrohr 8, das auch als Reinluftrohr oder Entnahmestutzen bezeichnet wird und für eine räumliche Trennung der Entnahmestellen für die entölte Druckluft und das abgeschiedene Öl sorgt. Das abgeschiedene Öl drainiert in dem Filter 1 in einen Ölsumpf in einem Sammelraum 10, der deshalb auch als Drainageraum bezeichnet wird, wird durch einen Drainageanschluss abgesaugt und in den Ölkreislauf der Druckluftanlage zurückgeführt. Der Drainageanschluss zum Entnehmen des abgeschiedenen Öls aus dem Ölsumpf ist nicht dargestellt

Der Filter 1 wird über einen zentralen axialen Anschraubnippel 11 mit einem Anschlusskopf 12 der Druckluftanlage dichtend verbunden. Für die radiale und axiale Abdichtung sorgen dabei drei verteilt angeordnete, nicht zusammenwirkende, radial wirkende Dichtungen in Form der O-Ringe 13, 14, 15. Der Anschlusskopf 12 weist auf der Rohseite des Filters 1 einen Auslass 16 für das zu reinigende Luft-Öl-Gemisch auf, das über eine entsprechende Öffnung in den Filter 1 eintritt und das Filterelement 3 radial von außen nach innen durchströmt, sowie auf der Reinseite des Filters 1 einen Einlass 17, durch den über das Tauchrohr 8 aus dem Filter 1 entnommene entölte Druckluft in die Druckluftanlage zurück geführt wird.

Das stirnseitige Ende des Filtergehäuses 2 wird durch eine stabile, in Metall ausgebildete Filterendscheibe 18 gebildet, die durch eine Bördelung 19 mit dem Filtergehäuse 2 verbunden ist.

Bei dem in Figur 1 dargestellten Filter 1 handelt es sich um eine so genannte stehende Variante, bei der der Filter 1 über dem Anschlusskopf 12 angeordnet ist. Die umgekehrte Ausführungsform, bei der der Filter 1 unter dem Anschlusskopf 12 angeordnet ist, wird als hängende Variante bezeichnet. Sie unterscheidet sich im Wesentlichen dadurch, dass sie eine den Filter 1 in axialer Länge durchziehende Leitung zum Absaugen des Ölsumpfes beinhaltet.

In manchen Ausführungsformen kann vorgesehen sein, beim Filterwechsel nur das Filterelement 3 auszutauschen und das Filtergehäuse 2 wieder zu verwenden. In anderen Ausführungsformen bilden das Filtergehäuse 2 und das darin eingesetzte Filterelement 3 eine Einheit, die ein gemeinsames Wegwerfteil darstellt.

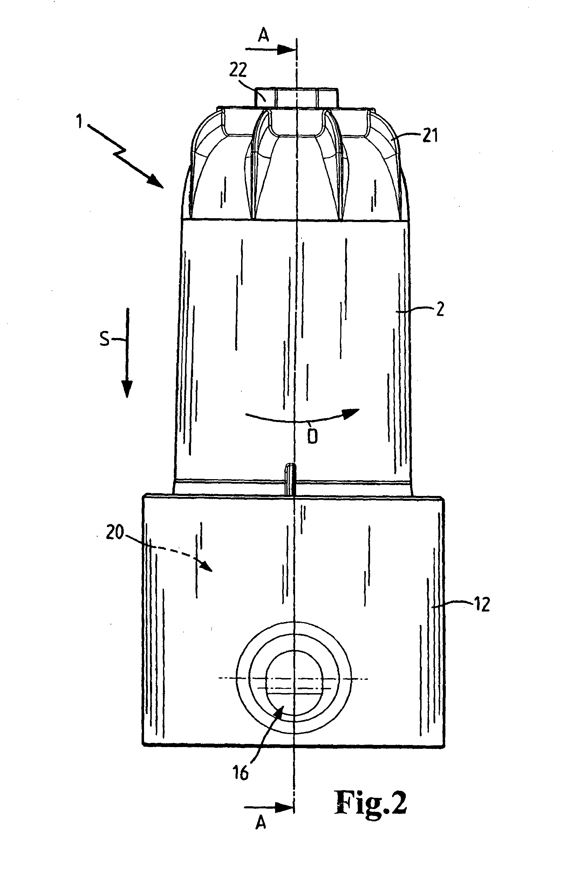

In Figur 2 ist ein erfindungsgemäßer Filter 1 dargestellt, der sich im Wesentlichen durch die Dichteinrichtung zum dichten Verbinden des stirnseitigen Endes des Filters 1 mit einem dazu korrespondierenden Anschlusskopf 12 unterscheidet. Dabei können das Filterelement 3 und die Filterendscheibe 18 anders gestaltet werden.

Das Filtergehäuse 2 ist in einer axialen Steckrichtung S in den Anschlusskopf 12 einsetzbar bzw. aufsetzbar und kann durch eine Steck-DrehBewegung formschlüssig mit dem Anschlusskopf 12 verbunden werden. Die Drehrichtung D zum Montieren des Filtergehäuses 2 ist durch einen Pfeil dargestellt. Das Filtergehäuse 1 und der Anschlusskopf 12 werden bevorzugt durch einen Bajonett-Verschluss 20 verbunden.

Zum Verbinden des Filters 1 mit dem Anschlusskopf 12 wird das Filtergehäuse 2 in Steckrichtung S in den Anschlusskopf 12 eingeführt und danach durch Drehen des Filtergehäuses 2 in der Drehrichtung D gedreht. Dadurch wird die Bajonettverbindung geschlossen und der Filter 1 sitzt fest auf bzw. in dem Aufnahmekopf 12. Ergänzend zu dieser mechanischen Verbindung sind Dichtelemente vorhanden, beispielsweise O-Ringe, Dichtlippen oder Dichtringe, die eine druckdichte Abdichtung bewirken. Zum Erleichtern der Montage oder Demontage weist das Filtergehäuse 2 ein Griffteil 21 oder einen Werkzeugansatz 22, beispielsweise für einen Innen- oder Außensechskant auf.

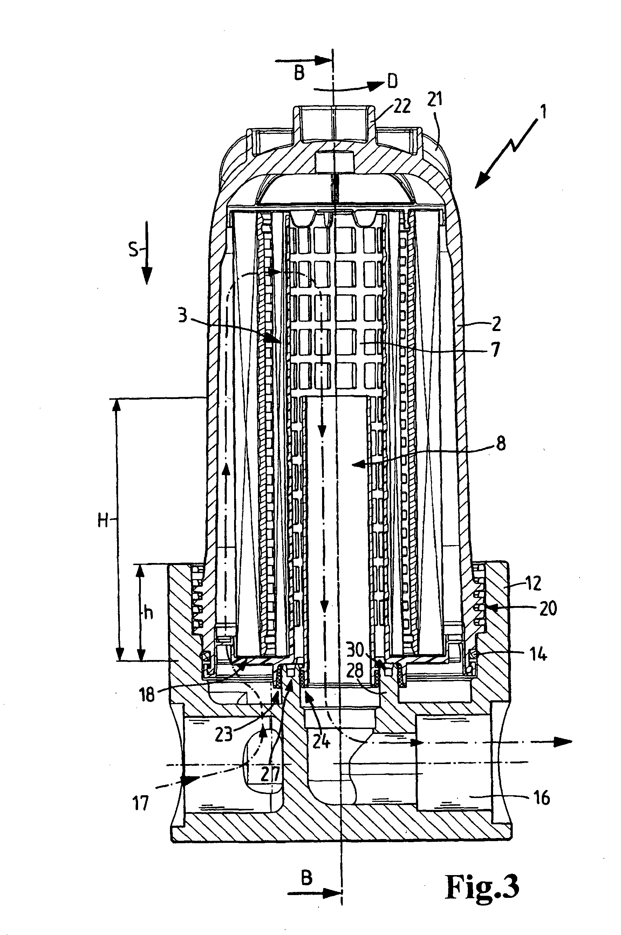

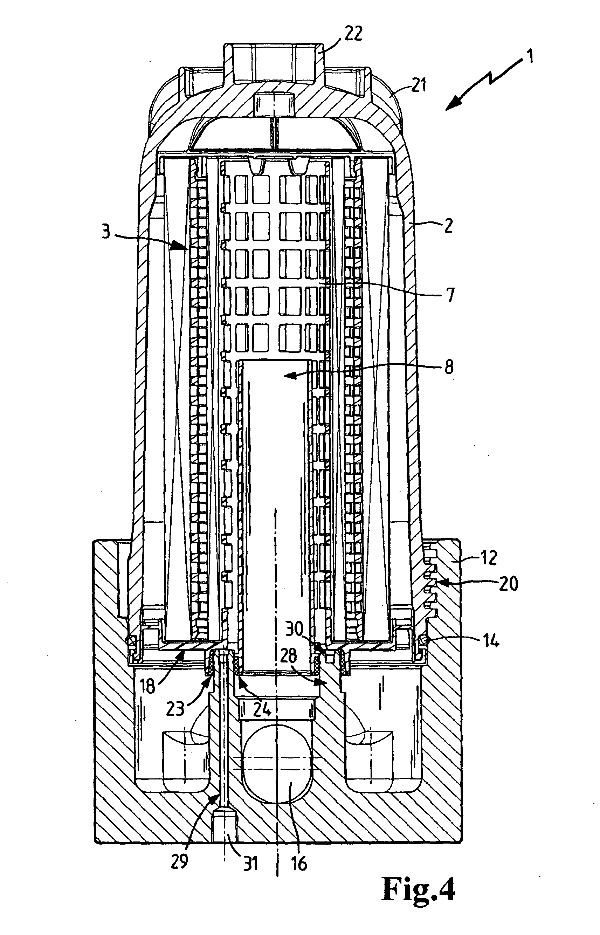

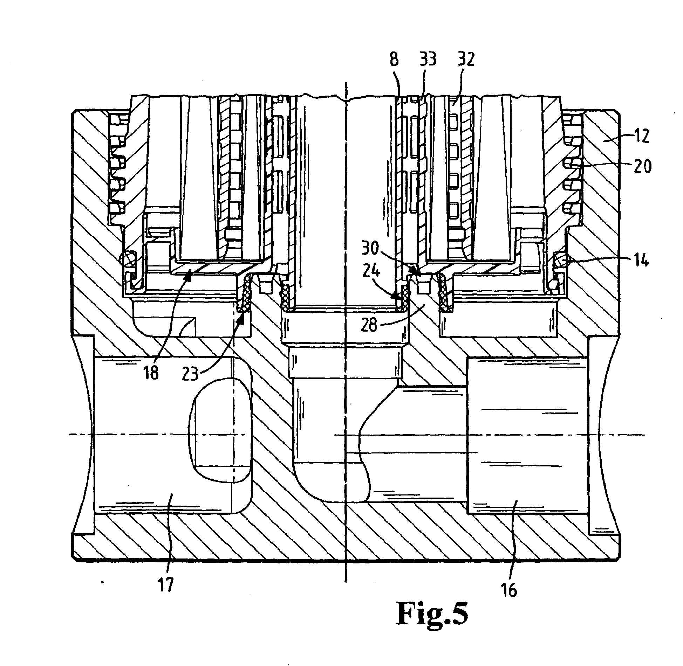

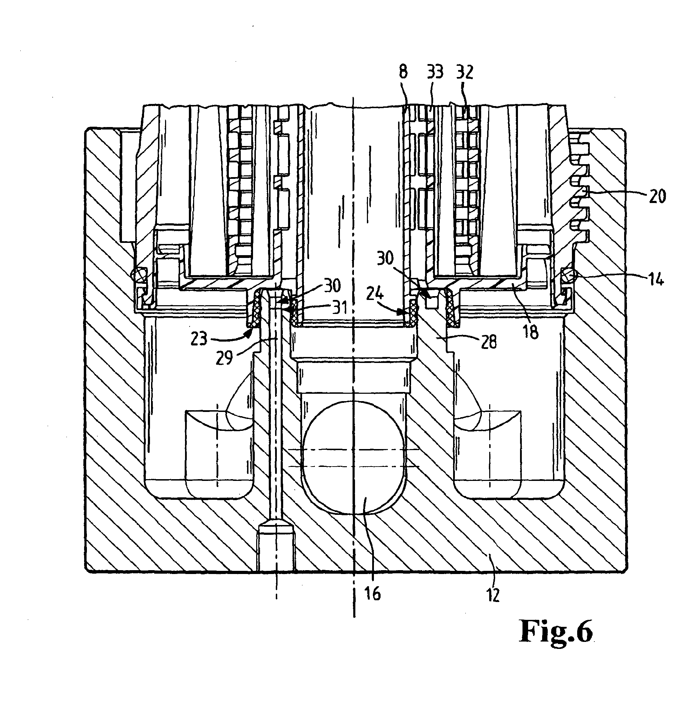

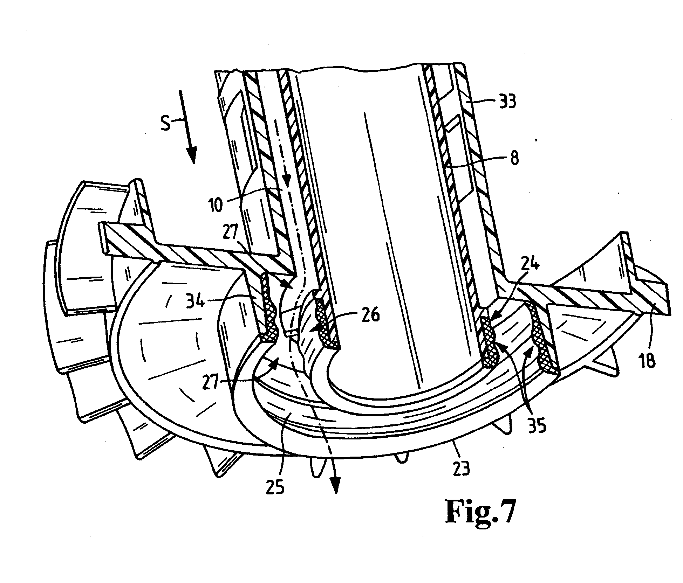

Die Figuren 3 und 4 zeigen zwei Längsschnitte des Filters 1 von Figur 2 nach der Montage, das heißt bei geschlossenem Bajonett-Verschluss 20. Die Figuren 5 und 6 zeigen Ausschnitte zu den Figuren 3 und 4. Die Figur 7 zeigt eine perspektivische Ansicht hierzu. Die Figuren 3 bis 7 werden im Folgenden gemeinsam beschrieben.

Bei dem erfindungsgemäßen Filter 1 umfasst die Filterendscheibe 18 eine elastische Außendichtung 23, die zum Abdichten der Rohseite des Filters 1 dient, und eine elastische Innendichtung 24, die zum Abdichten der Reinseite des Filters 1 dient. Dabei weist die Außendichtung 23 eine umlaufende, radial nach innen weisende Außendichtfläche 25 und die Innendichtung 24 eine umlaufende, radial nach außen weisende Innendichtfläche 26 auf. Die Außendichtfläche 25 und die Innendichtfläche 26 sind einander gegenüberliegend angeordnet und begrenzen einen dazwischenliegenden umlaufenden Dichtraum 27. Der Dichtraum 27 ist also der Raum zwischen den beiden Dichtkonturen bzw. Dichtbacken der Außendichtfläche 25 und der Innendichtfläche 27.

Der Anschlusskopf 12 weist einen umlaufenden Steg 28 auf, der bei der Montage des Filtergehäuses 2 an dem Anschlusskopf 12 in den Dichtraum 27 eingesteckt wird und durch eine Klemm- oder Presspassung mit der Außendichtung 23 und der Innendichtung 24 den Dichtraum 27 radial nach innen und außen abdichtet. Die Außendichtung 23 und die Innendichtung 24 sind somit als mit dem umlaufenden Steg 28 zusammenwirkende steckbare Dichtung ausgebildet, wobei zum Schließen der steckbaren Dichtung der Filter 1 in der axialen Steckrichtung S auf den mit den Filter 1 korrespondierenden Anschlusskopf 12 eingesetzt bzw. aufgesetzt wird.

Gemäß einer bevorzugten Weiterbildung ist vorgesehen, dass die Öldrainage in die Abdichtung integriert ist. Hierzu ist der Filter 1 derart ausgebildet, dass Flüssigkeit aus dem Sammelraum 10 des Filters 1 über eine Drainageleitung 29 entnommen werden kann, die durch den in dem Dichtraum 27 angeordneten Steg 28 hindurchgeführt ist. Hierzu weist der Anschlusskopf 12 eine durch den Steg 28 verlaufende Drainageleitung 29 auf. Ferner ist es vorteilhaft, wenn der Steg 28 auf seiner in axialer Richtung dem Filter 1 zugewandten Fläche eine umlaufende Nut 30 zum Sammeln von Flüssigkeit in dem Ölsumpf und zum Leiten der gesammelten Flüssigkeit zu einem Drainageauslass 31 aufweist, über den die Öldrainage in die Drainageleitung 29 ausgelassen werden kann.

Der Steg 28 wird bei der Montage des Filters 1 an dem Anschlusskopf 12 in dem Dichtraum 27 eingesteckt. Die Fixierung des Filtergehäuses 2 an den Anschlusskopf 12 erfolgt mit dem Bajonett-Verschluss 20, der in dem dargestellten Ausführungsbeispiel als mehrreihiger Bajonett-Verschluss ausgebildet ist, um auch in einer Ausführung in Kunststoff hohe Kräfte aufnehmen zu können.

Vorteilhafterweise umfasst die Filterendscheibe 18 ein in das Innere des Filtergehäuses 2 ragendes Tauchrohr 8. In bevorzugten Ausführungsformen besteht es ebenso wie die Filterendscheibe 18 aus Kunststoff und ist an die Filterendscheibe 18 angespritzt. Vorteilhafterweise kann die Innendichtung 24 auf der Außenseite des Tauchrohrs 8 angeordnet sein. Ferner kann der Filter 1 vorteilhafterweise einen von der Filterendscheibe 18 in das Innere des Filtergehäuses 2 ragendes Stützrohr 7 für ein Filtermedium umfassen. In dem dargestellten Ausführungsbeispiel sind dies ein erstes, in die Filterendscheibe 18 eingeklebtes Mittelrohr 32 für den Feinabscheider und ein zweites, angespritztes Mittelrohr 33 für den Nachabscheider. Vorteilhafterweise kann die Außendichtung 23 auf der Innenseite eines Stützrohres 8 angeordnet sein oder auf einem an der Filterendscheibe 8 in axialer Richtung hervorstehenden Tragsteg 34, der vorzugsweise einstückig mit der Filterendscheibe 18 ausgebildet ist.

Der gesamte Filter 1 umfassend das Filtergehäuse 2 und das Filterelement 3 mit Filterendscheibe 18, Stützrohr 7 und Tauchrohr 8 kann metallfrei ausgebildet sein. Dabei wird das Filterelement 3 bzw. die Filterendscheibe 18 beispielsweise in das Filtergehäuse 2 eingeklebt. Ein solche Ausführungsform hat eine sehr geringe Ausbauhöhe h, die erheblich kleiner ist als die Ausbauhöhe H eines entsprechenden gebräuchlichen Filters 1, bei dem das Tauchrohr 8 in den Anschlusskopf 12 integriert ist und daher der Filter 1 über das Tauchrohr 8 abgenommen werden muss.

Damit wird auch bei längeren Tauchrohren 8 der Vorteil eines geringen Platzbedarfs erzielt. Das Tauchrohr 8 darf nämlich nicht zu kurz ausgebildet sein, weil sich aufgrund der Luftströmung im Bereich des Ölsumpfes Ölverwirbelungen bzw. Ölvernebelungen bilden und deshalb die Entnahmestelle für Reinluft, d.h. die Eintrittsöffnung in das Tauchrohr 8, weit genug von dem Ölsumpf befinden muss.

Insbesondere in Figur 7 ist gut zu erkennen, dass die Außendichtfläche 25 der Außendichtung 23 und die Innendichtfläche 26 der Innendichtung 24 flächig ausgebildet sind und sich in axialer Richtung des Filters 1 erstrecken, um dadurch über einen längeren Bereich eine gute Abdichtung zu erzielen. Ferner umfassen die Dichtflächen 25, 26 eine oder mehrere umlaufende Dichtkonturen, z.B. Vertiefungen oder Rippen oder Dichtlippen 35, um einerseits zur Erzielung einer guten Abdichtung die Anpresskraft zu erhöhen und andererseits eine Steckbarkeit zu erleichtern.

In Figur 7 ist der Weg, über den abgeschiedenes Öl aus dem Ölsumpf durch die in die Dichtung integrierte Drainage in die Drainageleitung 29 geleitet wird, durch einen Pfeil veranschaulicht. Der umlaufende Dichtraum 27 ist als Sammelraum 10 für von dem Filter 1 abgeschiedene Flüssigkeit, beispielsweise Öl bei einem Ölabscheider, ausgebildet, da der Sammelraum 10 in den Dichtraum 27 übergeht bzw. mit diesem in Verbindung steht. Zu erkennen sind auch die umlaufenden Dichtlippen 35 in der Außendichtung 23 und in der Innendichtung 24. Die Dichtlippen 35 in der Außendichtung 23 ersetzen ihrer Funktion nach den O-Ring 13 des Filters 1 nach dem Stand der Technik gemäß Figur 1 und die Dichtlippen 35 in der Innendichtung 24 ersetzen ihrer Funktion nach den O-Ring 15 des Filters 1 nach dem Stand der Technik gemäß Figur 1.

In bevorzugten Ausführungsformen sind die Außendichtung 23 und/oder die Innendichtung 24 aus einem thermoplastischen Elastomer gebildet. Ein thermoplastisches Elastomer ist ein Kunststoff, der sich wie Gummi verhält. In bevorzugten Ausgestaltungen wird die Außendichtung 23 und/oder die Innendichtung 24 durch ein Spritzgieß-Verfahren auf das Filterelement 3, beispielsweise die Filterendscheibe 18, aufgebracht. Dadurch werden die Dichtungen stofflich mit dem Filterelement 3 bzw. der Filterendscheibe 18 verbunden, was eine hohe Dichtigkeit, eine kostengünstige Herstellung und die Vermeidung von Fehlern durch falsche oder falsch eingesetzte Dichtungen zur Folge hat.

Ein erfindungsgemäßes Dichtsystem umfassend eine elastische Außendichtung und eine elastische Innendichtung, wobei die Außendichtung eine umlaufende, radial nach innen weisende Außendichtfläche und die Innendichtung eine umlaufende, radial nach außen weisende Innendichtfläche bilden, die Außendichtfläche und die Innendichtfläche einander gegenüberliegend angeordnet sind und einen dazwischen liegenden umlaufenden Dichtraum in radialer Richtung begrenzen, und die Außendichtung und die Innendichtung als zusammenwirkende steckbare Dichtung ausgebildet sind, wobei zum Schließen der steckbaren Dichtung der Filter in einer axialen Steckrichtung auf einen mit dem Filter korrespondierenden Anschlusskopf einsetzbar bzw. aufsetzbar ist, wobei der Anschlusskopf einen umlaufenden Steg aufweist, der dabei in den Dichtraum eingesteckt wird und durch eine Klemm- oder Presspassung mit der Außen- und der Innendichtung den Dichtraum radial abdichtet, kann auch bei einem Filter mit einem Filtergehäuse und einem darin aufgenommenen Filtereinsatz mit einem Filterelement, einer stirnseitig am Filtereinsatz angeordnete Filterendscheibe verwendet werden, der keinen Sammelraum für von dem Filter abgeschiedene Flüssigkeit, die über eine mit dem Sammelraum in Verbindung stehende Drainageleitung in der Filterendscheibe aus dem Filter entnommen werden kann, aufweist, beispielsweise einem Ölfilter zum Abscheiden von Schmutzpartikeln aus einem Ölstrom, bei dem sich die Schmutzpartikel in dem Filtereinsatz abscheiden. In diesem Fall dient das Dichtsystem nicht zum Abdichten der Rohseite des Filters gegenüber dem Sammelraum und nicht zum Abdichten der Reinseite des Filters gegenüber dem Sammelraum, sondern wirkt hat die Funktion eines O-Rings, trennt also die Rohseite von der Reinseite.

## Patentansprüche

1. Filter (1), insbesondere zum Entölen von Luft, umfassend ein Filtergehäuse (2) und einen darin aufgenommenen Filtereinsatz mit einem Filterelement (3), eine stirnseitig am Filtereinsatz angeordnete Filterendscheibe (18) und einen Sammelraum (10) für von dem Filter (1) abgeschiedene Flüssigkeit, die über eine mit dem Sammelraum (10) in Verbindung stehende Drainageleitung (29) in der Filterendscheibe (18) aus dem Filter (1) entnommen werden kann,
**dadurch gekennzeichnet, dass**
die Filterendscheibe (18) eine elastische Außendichtung (23) umfasst, die zum Abdichten der Rohseite (16) des Filters (1) gegenüber dem Sammelraum (10) dient, und eine elastische Innendichtung (24) umfasst, die zum Abdichten der Reinseite (17) des Filters (1) gegenüber dem Sammelraum (10) dient, wobei die Außendichtung (23) eine umlaufende, radial nach innen weisende Außendichtfläche (25) und die Innendichtung (24) eine umlaufende, radial nach außen weisende Innendichtfläche (26) bilden, die Außendichtfläche (25) und die Innendichtfläche (26) einander gegenüberliegend angeordnet sind und einen dazwischen liegenden umlaufenden Dichtraum (27) in radialer Richtung begrenzen, wobei der Dichtraum (27) als Sammelraum (10) für von dem Filter abgeschiedene Flüssigkeit ausgebildet ist oder in einen Sammelraum (10) übergeht oder mit einen Sammelraum (10) in Verbindung steht, und wobei die Außendichtung (23) und die Innendichtung (24) als zusammenwirkende steckbare Dichtung ausgebildet sind, wobei zum Schließen der steckbaren
Dichtung der Filter (1) in einer axialen Steckrichtung (S) auf einen mit dem Filter (1) korrespondierenden Anschlusskopf (12) einsetzbar bzw. aufsetzbar ist, wobei der Anschlusskopf (12) einen umlaufenden Steg (28) aufweist, der dabei in den Dichtraum (27) eingesteckt wird und durch eine Klemm- oder Presspassung mit der Außen- und der Innendichtung den Dichtraum (27) radial abdichtet.

2. Filter (1) nach dem vorhergehenden Anspruch, **dadurch gekennzeichnet, dass** der umlaufende Dichtraum (27) als Sammelraum (10) für von dem Filter (1) abgeschiedene Flüssigkeit ausgebildet ist.

3. Filter (1) nach einem der vorhergehenden Ansprüche, **dadurch gekennzeichnet, dass** er derart ausgebildet ist, dass Flüssigkeit aus dem Sammelraum (10) des Filters (1) oder aus dem Dichtraum (27) über eine Drainageleitung (29) entnommen werden kann, die durch den in dem Dichtraum (27) angeordneten Steg (28) hindurchgeführt ist.

4. Filter (1) nach einem der vorhergehenden Ansprüche, **dadurch gekennzeichnet, dass** die Dichtfläche der Außendichtung (23) und/oder der Innendichtung (24) flächig ausgebildet und sich in axialer Richtung des Filters (1) erstreckend ausgebildet ist.

5. Filter (1) nach einem der vorhergehenden Ansprüche, **dadurch gekennzeichnet, dass** die Dichtfläche eine oder mehrere umlaufende Dichtkonturen, beispielsweise Vertiefungen und/oder Rippen und/oder Dichtlippen (35) aufweist.

6. Filter (1) nach einem der vorhergehenden Ansprüche, **dadurch gekennzeichnet, dass** die Außendichtung (23) und/oder die Innendichtung (24) aus einem thermoplastischen Elastomer gebildet ist wobei insbesondere die Außendichtung (23) und/oder die Innendichtung (24) durch ein Spritzgießverfahren auf den Filtereinsatz, das Filterelement (3) oder die Filterendscheibe (18) aufgebracht ist.

7. Filter (1) nach einem der vorhergehenden Ansprüche, **dadurch gekennzeichnet, dass** er einen von der Filterendscheibe (18) in das Innere des Filtergehäuses (2) ragendes Tauchrohr (8) umfasst, wobei insbesondere die Innendichtung (24) auf der Außenseite des Tauchrohrs (8) angeordnet ist.

8. Filter (1) nach einem der vorhergehenden Ansprüche, **dadurch gekennzeichnet, dass** er mindestens ein von der Filterendscheibe (18) in das Innere des Filtergehäuses (2) ragendes Stützrohr (7, 9) für ein Filtermedium umfasst, wobei insbesondere die Außendichtung (23) auf der Innenseite des Stützrohres (7) angeordnet ist.

9. Filter (1) nach einem der vorhergehenden Ansprüche, **dadurch gekennzeichnet, dass** das Filtergehäuse (2) einen Bajonett-Anschluss (20) zum Verbinden mit dem Anschlusskopf (12) aufweist.

10. Filter (1) nach einem der vorhergehenden Ansprüche, **dadurch gekennzeichnet, dass** er metallfrei ausgebildet ist.

11. Anschlusskopf zum Anschließen eines Filters (1), **dadurch gekennzeichnet, dass** er einen umlaufenden Steg (28) zum Anschließen eines Filters (1) nach
einem der vorhergehenden Ansprüche aufweist, der bei der Montage des Filters (1) an dem Anschlusskopf (12) in den Dichtraum (27) eingesteckt wird, wobei der Anschlusskopf eine durch den Steg (28) verlaufende Drainageleitung (29) aufweist.

12. Anschlusskopf (12) nach Anspruch 11, **dadurch gekennzeichnet, dass** der Steg (28) auf seiner in axialer Richtung dem Filter (1) zugewandten Fläche eine umlaufende Nut (30) zum Sammeln von Flüssigkeit und zum Leiten der gesammelten Flüssigkeit zu einem Drainageauslass (31) aufweist.

13. Filteranschluss-System, umfassend einen Filter (1) nach einem der Ansprüche 1 bis 10 und einen Anschlusskopf (12) nach einem der Ansprüche 11 bis 12.

14. Druckluftanlage zum Erzeugen von Druckluft, **dadurch gekennzeichnet, dass** sie einen Filter (1) nach einem der Ansprüche 1 bis 10 oder einen Anschlusskopf (12) nach einem der Ansprüche 11 bis 12 aufweist.

15. Brennkraftmaschine, **dadurch gekennzeichnet, dass** sie einen Filter (1) nach einem der Ansprüche 1 bis 10 oder einen Anschlusskopf (12) nach einem der Ansprüche 11 bis 12 aufweist.

## Claims

1. Filter (1), in particular for de-oiling of air, comprising a filter housing (2) and a filter insert accommodated therein having a filter element (3), a filter end disk (18) disposed frontally on the filter insert and a collecting chamber (10) for liquid separated by the filter (1) which can be removed from the filter (1) via a drain pipe (29) in the filter end disk (18) connected with the collecting chamber (10), **characterized in that** the filter end disk (18) comprises a resilient external gasket (23) which serves to seal the raw side (16) of the filter (1) in relation to the collecting chamber (10), and comprises a resilient internal gasket (24) which serves to seal the clean side (17) of the filter (1) in relation to the collecting chamber (10), the external gasket (23) forming a circumferential, radially inwardly directed external gasket surface (25) and the internal gasket (24) forming a circumferential, radially outwardly directed internal gasket surface (26), that the external gasket surface (25) and the internal gasket surface (26) are disposed opposite each other and define a circumferential gasket chamber (27) disposed therebetween in radial direction, the gasket chamber (27) being designed as collecting chamber (10) for the liquid separated by the filter (1) or merging into a collecting chamber (10) or being connected with a collecting chamber (10), and the external gasket (23) and the internal gasket (24) being designed as interacting plug-in gasket, the filter (1) for closing the plug-in gasket being insertable or attachable in an axial insertion direction (S) on a connecting head (12) corresponding with the filter (1), the connecting head (12) featuring a circumferential rib (28) which is inserted into the gasket chamber (27) and radially seals the gasket chamber (27) by means of a clamp or press fitting with the external and the internal gasket.

2. Filter (1) according to the above claim, **characterized in that** the circumferential gasket chamber (27) is designed as collecting chamber (10) for the liquid separated by the filter (1).

3. Filter (1) according to one of the above claims, **characterized in that** it is designed such that liquid can be removed from the collecting chamber (10) of the filter (1) or from the gasket chamber (27) via a drain pipe (29) which is passed through the rib (28) disposed in the gasket chamber (27).

4. Filter (1) according to one of the above claims, **characterized in that** the sealing surface of the external gasket (23) and/or the internal gasket (24) is formed over the whole surface and extends in axial direction of the filter (1).

5. Filter (1) according to one of the above claims, **characterized in that** the sealing surface features one or more circumferential sealing contours, for example indentations and/or ribs and/or sealing lips (35).

6. Filter (1) according to one of the above claims, **characterized in that** the external gasket (23) and/or the internal gasket (24) is made of a thermoplastic elastomer, in particular the external gasket (23) and/or the internal gasket (24) being applied by means of an injection molding process to the filter insert, the filter element (3) or the filter end disk (18).

7. Filter (1) according to one of the above claims, **characterized in that** it comprises an immersion tube (8) protruding from the filter end disk (18) into the interior of the filter housing (2), in particular the internal gasket (24) being disposed on the exterior side of the immersion tube (8).

8. Filter (1) according to one of the above claims, **characterized in that** it comprises at least one support tube (7, 9) for a filter medium protruding from the filter end disk (18) into the interior of the filter housing (2), in particular the external gasket (23) being disposed on the interior side of the support tube (7).

9. Filter (1) according to one of the above claims, **characterized in that** the filter housing (2) features a bayonet connection (20) for the connection with the connecting head (12).

10. Filter (1) according to one of the above claims, **characterized in that** it is designed without any metal.

11. Connecting head for connecting a filter (1), **characterized in that** it features a circumferential rib (28) for connecting a filter (1) according to one of the above claims, which is inserted into the gasket chamber (27) when the filter (1) is mounted to the connecting head (12), the connecting head featuring a drain pipe (29) extending through the rib (28).

12. Connecting head (12) according to claim 11, **characterized in that** the rib (28) features on its surface facing the filter (1) in axial direction a circumferential groove (30) for collecting liquid and for piping the collected liquid to a drain outlet (31).

13. Filter connecting system, comprising a filter (1) according to one of the claims 1 to 10 and a connecting head (12) according to one of the claims 11 to 12.

14. Compressed air system for generating compressed air, **characterized in that** it features a filter (1) according to one of the claims 1 to 10 or a connecting head (12) according to one of the claims 11 to 12.

15. Internal combustion engine, **characterized in that** it features a filter (1) according to one of the claims 1 to 10 or a connecting head (12) according to one of the claims 11 to 12.

## Revendications

1. Filtre (1), notamment destiné au déshuilage d'air, comprenant un boîtier de filtre (2) et un insert de filtre intégré à ce boîtier avec un élément filtrant (3), un disque d'extrémité de filtre (18) placé sur la face frontale de l'insert de filtre et un compartiment collecteur (10) pour le liquide séparé du filtre (1) qui peut être extrait du filtre (1) par l'intermédiaire d'une conduite de drainage (29) reliée avec le compartiment collecteur (10) et située dans le disque d'extrémité de filtre (18), **caractérisé en ce que** le disque d'extrémité de filtre (18) comprend un joint extérieur (23) élastique servant à étancher le côté brut (16) du filtre (1) par rapport au compartiment collecteur (10) et un joint intérieur (24) élastique servant à étancher le côté pur (17) du filtre (1) par rapport au compartiment collecteur (10), le joint extérieur (23) formant une surface d'étanchéité extérieure (25) circulaire orientée en sens radial vers l'intérieur et le joint intérieur (24) formant une surface d'étanchéité intérieure (26) circulaire orientée en sens radial vers l'extérieur, que la surface d'étanchéité extérieure (25) et la surface d'étanchéité intérieure (26) sont disposées l'une en face de l'autre et limitent en sens radial un compartiment d'étanchéité (27) circulaire situé entre ces surfaces, le compartiment d'étanchéité (27) étant exécuté comme compartiment collecteur (10) pour le liquide séparé du filtre ou se confond dans un compartiment collecteur (10) ou est relié à un compartiment collecteur (10), le joint extérieur (23) et le joint intérieur (24) étant exécutés en tant que joint emboîtable concourant, le filtre (1) pouvant, pour la fermeture du joint emboîtable, être inséré dans ou monté sur une tête de raccordement (12), en sens d'emboîtement axial (S), en correspondance avec le filtre (1), la tête de raccordement (12) présentant une nervure (28) circulaire qui, ce faisant, est emboîtée dans le compartiment d'étanchéité (27) et étanche, par un ajustage serré ou pressé avec le joint extérieur et le joint intérieur, le compartiment d'étanchéité (27) en sens radial.

2. Filtre (1) selon la revendication précédente, **caractérisé en ce que** le compartiment d'étanchéité (27) circulaire est exécuté en tant que compartiment collecteur (10) pour le liquide séparé du filtre (1).

3. Filtre (1) selon l'une des revendications précédentes, **caractérisé en ce qu'**il est exécuté de sorte qu'il soit possible d'extraire du liquide du compartiment collecteur (10) du filtre (1) ou du compartiment d'étanchéité (27) par l'intermédiaire d'une conduite de drainage (29) et que ce liquide soit acheminé à travers la nervure (28) disposée dans le compartiment d'étanchéité (27).

4. Filtre (1) selon l'une des revendications précédentes, **caractérisé en ce que** la surface d'étanchéité du joint extérieur (23) et/ou du joint intérieur (24) est réalisée de manière plane et s'étend dans le sens axial du filtre (1).

5. Filtre (1) selon l'une des revendications précédentes, **caractérisé en ce que** la surface d'étanchéité présente un ou plusieurs contours d'étanchéité circulaires comme des creux et/ou des nervures et/ou des lèvres d'étanchéité (35).

6. Filtre (1) selon l'une des revendications précédentes, **caractérisé en ce que** le joint extérieur (23) et/ou le joint intérieur (24) est fait d'un élastomère thermoplastique, notamment le joint extérieur (23) et/ou le joint intérieur (24) étant appliqués par un procédé de moulage par injection sur l'insert de filtre, l'élément filtrant (3) ou le disque d'extrémité de filtre (18).

7. Filtre (1) selon l'une des revendications précédentes, **caractérisé en ce qu'**il comprend un tube plongeur (8) dépassant du disque d'extrémité de filtre (18) vers l'intérieur du boîtier de filtre (2), notamment le joint intérieur (24) étant disposé sur la face extérieure du tube plongeur (8).

8. Filtre (1) selon l'une des revendications précédentes, **caractérisé en ce qu'**il comprend au moins un tube de soutien (7, 9) dépassant du disque d'extrémité de filtre (18) vers l'intérieur du boîtier de filtre (2) pour un milieu filtrant, notamment le joint extérieur (23) étant disposé sur la face intérieure du tube de soutien (7).

9. Filtre (1) selon l'une des revendications précédentes, **caractérisé en ce que** le boîtier de filtre (2) est doté d'un raccord à baïonnette (20) servant à le relier à la tête de raccordement (12).

10. Filtre (1) selon l'une des revendications précédentes, **caractérisé en ce qu'**il est exempt de métal.

11. Tête de raccordement destinée à raccorder un filtre (1), **caractérisée en ce qu'**elle présente une nervure (28) circulaire pour raccorder un filtre (1) selon l'une des revendications précédentes, cette nervure étant emboîtée, lors du montage du filtre (1) sur la tête de raccordement (12), dans le compartiment d'étanchéité (27) et la tête de raccordement présentant une conduite de drainage (29) évoluant à travers la nervure (28).

12. Tête de raccordement (12) selon la revendication 11, **caractérisée en ce que** la nervure (28), sur sa surface orientée en sens axial vers le filtre (1), présente une rainure (30) circulaire pour collecter le liquide et acheminer le liquide collecté vers un écoulement de drainage (31).

13. Système de raccordement de filtre comprenant un filtre (1) selon l'une des
revendications 1 à 10 et une tête de raccordement (12) selon l'une des revendications 11 à 12.

14. Installation pneumatique destinée à générer de l'air comprimé, **caractérisée en ce qu'**elle présente un filtre (1) selon l'une des revendications 1 à 10 ou une tête de raccordement (12) selon l'une des revendications 11 à 12.

15. Moteur à combustion interne, **caractérisé en ce qu'**il présente un filtre (1) selon l'une des revendications 1 à 10 ou une tête de raccordement (12) selon l'une des revendications 11 à 12.
